(19) Europäisches Patentamt
European Patent Office
Office européen des brevets

(11) **EP 2 868 824 A1**

(12) **EUROPEAN PATENT APPLICATION**
published in accordance with Art. 153(4) EPC

(43) Date of publication:
**06.05.2015 Bulletin 2015/19**

(51) Int Cl.:
***E04B 1/76*** *(2006.01)*   ***F24F 11/02*** *(2006.01)*

(21) Application number: **13808444.7**

(86) International application number:
**PCT/JP2013/003434**

(22) Date of filing: **30.05.2013**

(87) International publication number:
**WO 2014/002382 (03.01.2014 Gazette 2014/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.06.2012 JP 2012146598**

(71) Applicant: **Panasonic Intellectual Property Management Co., Ltd.**
**Osaka-shi, Osaka 540-6207 (JP)**

(72) Inventors:
• **YAMAMOTO, Yuka**
**Osaka-shi, Osaka 540-6207 (JP)**
• **MURO, Naoki**
**Osaka-shi, Osaka 540-6207 (JP)**
• **TOYODA, Kenji**
**Osaka-shi, Osaka 540-6207 (JP)**
• **KAKIMOTO, Atsushi**
**Osaka-shi, Osaka 540-6207 (JP)**

(74) Representative: **Appelt, Christian W.**
**Boehmert & Boehmert**
**Anwaltspartnerschaft mbB**
**Patentanwälte Rechtsanwälte**
**Pettenkoferstrasse 20-22**
**80336 München (DE)**

(54) **INSULATION PERFORMANCE ESTIMATION DEVICE**

(57)     An insulation performance estimation device includes an acquiring unit, a storage unit, a calculation unit, and a presentation control unit. The acquiring unit is configured to acquire an indoor temperature in an indoor space of a building from an indoor temperature sensor, and an outdoor air temperature outside the building from an outdoor temperature sensor. The calculation unit is configured to estimate, based on an environment that is set for the indoor space, a quantity of heat that is transferred between the indoor space and an outdoor through a partition surrounding the indoor space. The calculation unit is configured to calculate heat insulation performance, based on the quantity of heat, and the indoor temperature and the outdoor air temperature acquired by the acquiring unit. A calculation result of the heat insulation performance by the calculation unit is presented by a presentation apparatus through the presentation control unit.

FIG. 1

**Description**

TECHNICAL FIELD

The invention relates to an insulation performance estimation device, which is configured to measure heat insulation performance of a building with an indoor space where air conditioning is performed.

BACKGROUND ART

Generally, it is required to calculate heat load in an indoor space for design of air conditioning in the indoor space. The heat load in the indoor space is calculated, using a quantity of heat that is transferred between the indoor space and an outdoor through a partition surrounding the indoor space, a quantity of heat that is generated by a heat source that exists in the indoor space, a quantity of heat that is transferred into the indoor space by solar radiation, and a quantity of heat that is transferred between the indoor space and the outdoor through air as a medium. Here, the quantity of heat, transferred through the partition surrounding the indoor space, depends on heat insulation performance of the partition, such as an inner wall, an outer wall, a ceiling, a roof or a floor. Such heat insulation performance may change with passage of time.

On the other hand, an air conditioner, spread widely as a cooling and heating apparatus, consumes relatively-large electric energy, compared with other electric apparatuses to be used in a building. Accordingly, in a general consumer's building, the energy charge tends to be significantly increased in winter or summer in which a time period of using an air conditioner is longer than that in other seasons. In addition, recently, a unit price of the energy charge tends to be raised, and further, a reduction in electric energy to be consumed is proposed to reduce $CO_2$ emissions. Therefore, it is required for a power consumer to select a cooling and heating apparatus so that excess and insufficiency of the performance do not occur.

For example, in JP S59-7839 A (hereinafter, referred to as "document 1"), described is technique of calculating a quantity of heat due to disturbances, such as a quantity of heat by a heat source and a quantity of heat by solar radiation, among heat load. The technique described in the document 1 is to calculate the quantity of heat due to disturbances, using a quantity of heat calculated by considering an outdoor temperature and a quantity of solar radiation, a quantity of generated heat by electric apparatuses including a luminaire, and a quantity of emitted heat by a human body.

Also, in JP 2009-14218 A (hereinafter, referred to as "document 2"), described is technique of calculating theoretical heating load, using heat insulation performance (a heat loss coefficient) of the whole of a building, a total floor area of the building, an outdoor temperature and a setting temperature. In the technique described in the document 2, it is required to previously set the heat insulation performance to calculate the theoretical heating load.

By using the technique in the document 1 or 2, it is possible to calculate the heat load. However, the documents do not disclose technique of calculating heat insulation performance itself of a building. For example, the document 1 does not disclose heat insulation performance of a building with an indoor space. Further, the technique in the document 2 is required to previously set heat insulation performance to be used for calculating the heat load, and the document 2 does not disclose technique of measuring heat insulation performance of a building.

DISCLOSURE OF THE INVENTION

It is an object of the present invention to provide an insulation performance estimation device, which can estimate heat insulation performance of a building with an indoor space.

An insulation performance estimation device according to the present invention includes an acquiring unit and a calculation unit. The acquiring unit is configured to acquire an indoor temperature in an indoor space of a building from an indoor temperature sensor, and an outdoor air temperature outside the building from an outdoor temperature sensor. The calculation unit is configured to estimate, based on an environment that is set for the indoor space, a quantity of heat that is transferred between the indoor space and an outdoor through a partition surrounding the indoor space. The calculation unit is configured to calculate heat insulation performance of the building, based on the quantity of heat, and the indoor temperature and the outdoor air temperature acquired by the acquiring unit.

In the insulation performance estimation device, the acquiring unit is preferably configured to acquire: information related to the number of persons, from a human sensor configured to measure the number of persons in the indoor space; information related to an operation state of an apparatus, from an operation monitoring sensor configured to monitor the apparatus in the indoor space; and information related to an opened/closed state of an opening, from an opening/closing sensor configured to detect whether the opening in the indoor space is in an opened state or a closed state. In this case, the calculation unit is preferably configured to respectively calculate plural quantities of heat increasing or decreasing in the indoor space with respect to plural kinds of environments that are set by combining the information related to the number of persons, the operation state and the opened/closed state, and is preferably configured to calculate heat load for keeping constant the indoor temperature by combining the calculated plural quantities of heat.

In the insulation performance estimation device, the acquiring unit is preferably configured to acquire a quantity of solar radiation from a solar radiation sensor configured to detect the quantity of solar radiation into the indoor space. In this case, the calculation unit is preferably configured respectively calculate plural quantities of heat increasing or decreasing in the indoor space with respect to plural kinds of environments in which plural quantities of solar radiation are different, and is preferably configured to calculate heat load for keeping constant the indoor temperature, depending on the acquired quantity of solar radiation, with relationships of the calculated plural quantities of heat and the plural quantities of solar radiation.

The insulation performance estimation device preferably further includes an operation unit configured to allow the calculation unit to start calculation of the heat insulation performance. In this case, the calculation unit is preferably configured to calculate the heat insulation performance corresponding to an operation to the operation unit.

The insulation performance estimation device preferably further includes a presentation control unit configured to allow a presentation apparatus to present a result of calculation by the calculation unit.

In the insulation performance estimation device, the calculation unit is preferably configured to calculate, as an evaluation value denoting the heat insulation performance, a value obtained by dividing an absolute value of a difference between the indoor temperature and the outdoor air temperature by the quantity of heat.

In the insulation performance estimation device, the acquiring unit is preferably configured to perform acquiring operation at measurement intervals that are prescribed time intervals, and the calculation unit is preferably configured to calculate the heat insulation performance at the prescribed time intervals.

In the insulation performance estimation device, the calculation unit is preferably configured to estimate, as the quantity of heat that is transferred between the indoor space and the outdoor through the partition surrounding the indoor space, a value obtained by subtracting: a heat absorbing quantity of the indoor space corresponding to the indoor temperature; and a quantity of heat that is transferred between the indoor space and the outdoor through a flow of air with ventilation, from a sum of a quantity of heat that is generated by an apparatus in the indoor space; a quantity of heat by solar radiation; and a quantity of heat that is emitted by a person existing in the indoor space.

According to the configuration of the present invention, the insulation performance estimation device is configured to estimate, by setting a specific environment to the indoor space, the quantity of heat to be generated in the indoor space corresponding to the environment, in addition to the indoor temperature and the outdoor air temperature. Therefore, it is possible to estimate the heat insulation performance of the building with the indoor space.

## BRIEF DESCRIPTION OF THE DRAWINGS

Preferred embodiments of the present invention will now be described in further details. Other features and advantages of the present invention will become better understood with regard to the following detailed description and accompanying drawings where:

Fig. 1 is a block diagram illustrating an insulation performance estimation device according to First Embodiment;
Fig. 2 is a block diagram illustrating an insulation performance estimation device according to Second Embodiment; and
Fig. 3 is a block diagram illustrating an insulation performance estimation device according to Third Embodiment.

## BEST MODE FOR CARRYING OUT THE INVENTION

(First Embodiment)

An insulation performance estimation device described later is configured to evaluate a quantity of heat that is transferred between an indoor space and an outdoor through a partition surrounding the indoor space, and accordingly, can easily calculate an evaluation value denoting heat insulation performance of a building with the indoor space. The partition surrounding the indoor space may include a wall (an inner wall or an outer wall), a ceiling, a roof, a floor and a windowpane, for example. The evaluation value denoting the heat insulation performance of the building with the indoor space is used as a thermal resistance **R** represented by Formula 1. In other words, the thermal resistance **R** calculated by Formula 1 denotes the heat insulation performance of the building with the indoor space. Note that, in Formula 1, **T1** denotes an indoor temperature in the indoor space of the building, and **T2** denotes an outdoor air temperature outside the building, and **Q12** denotes a quantity of heat that is transferred between the indoor space and the outdoor through the partition (wall).

$$[\text{Formula 1}]$$

$$R = \frac{|T1 - T2|}{Q12}$$

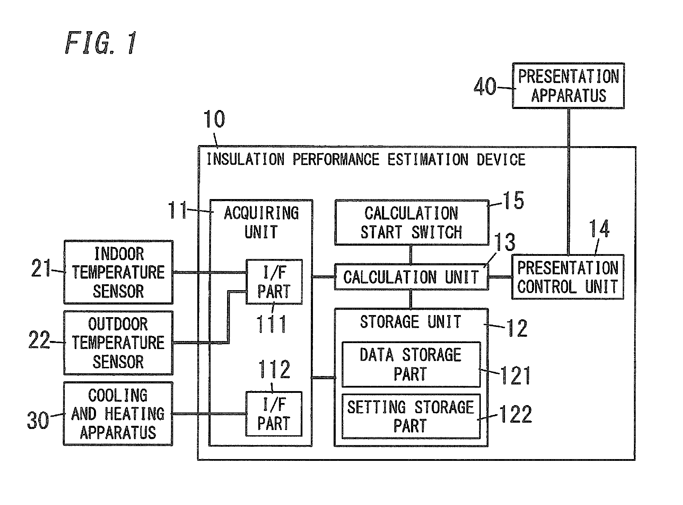

Because the indoor temperature **T1** and the outdoor air temperature **T2** are required for calculation of Formula 1, as shown in Fig. 1, an insulation performance estimation device **10** includes an acquiring unit **11.** The acquiring unit **11** is configured to acquire an indoor temperature detected by an indoor temperature sensor **21** and an outdoor air temperature detected by an outdoor temperature sensor **22** at measurement intervals that are prescribed time intervals. The acquiring unit **11** includes an interface part **111** (hereinafter, an interface part is referred to as an "I/F part") for connecting the indoor temperature sensor **21** and the outdoor temperature sensor **22** with the insulation performance estimation device. As described later, because it is required to acquire a setting temperature of a cooling and heating apparatus **30**, the acquiring unit **11** further includes an I/F part **112** of acquiring the setting temperature from the cooling and heating apparatus **30**.

Each measurement interval is normally a constant time interval (e.g., selected from 1min, 5min, 10min, 30min, 1hour, 1day and the like). Data related to the indoor temperature and the outdoor air temperature acquired by the acquiring unit **11** is stored in a data storage part **121** of a storage unit **12** that is provided in the insulation performance estimation device **10**.

The insulation performance estimation device **10** further includes a calculation unit **13**. The calculation unit **13** is configured to calculate heat insulation performance (thermal resistance **R**) of a building by substituting in Formula 1 the data related to the indoor temperature and the outdoor air temperature stored in the data storage part **121**. Here, required is data related to the quantity of heat **Q12** that is transferred between the indoor space and the outdoor through the partition (wall or the like) in order to calculate the thermal resistance **R**, using Formula 1. The quantity of heat **Q12** is obtained by the following calculation.

In the present embodiment, it is assumed that the quantity of heat **Q12** is represented by a relationship **of "Q12 = Q21 + Q22 + Q23 + Q24 - Q13 - Q14".** Note that, **Q21** denotes a quantity of heat that is generated by the cooling and heating apparatus **30**, and **Q22** denotes a quantity of heat by solar radiation, and **Q23** denotes a quantity of heat that is generated by an apparatus(es) other than the cooling and heating apparatus **30**, and **Q24** denotes a quantity of heat that is emitted by a person(s) existing in the indoor space. **Q13** denotes a heat absorbing quantity of the indoor space corresponding to the indoor temperature. **Q14** denotes a quantity of heat that is transferred between the indoor space and the outdoor through a flow of air with ventilation. The heat absorbing quantity **Q13** of the indoor space corresponding to the indoor temperature is represented by Formula 2. Note that, in Formula 2, **C1** denotes a heat capacity of the indoor space, and it is preferred to use an overall heat capacity of the indoor space, including heat capacities of furniture and fixtures in the indoor space. However, for simplification of calculation, a heat capacity of air, which can be obtained from the volume of the indoor space, may be used as the heat capacity **C1** of the indoor space. The heat absorbing quantity **Q13** is proportional to a change of the indoor temperature **T1** with time.

[Formula 2]

$$Q13 = C1 \frac{dT1}{dt}$$

In the present embodiment, the quantity of heat **Q21** and the heat absorbing quantity **Q13**, in the quantity of heat **Q12** as a denominator of Formula 1, are estimated with the indoor temperature **T1** acquired from the indoor temperature sensor **21** and the setting temperature acquired from the cooling and heating apparatus **30**. In other words, the quantity of heat **Q21** that is generated by the cooling and heating apparatus **30** is estimated with a difference between the indoor temperature **T1** and the setting temperature of the cooling and heating apparatus **30**. The heat absorbing quantity **Q13** is estimated based on a change of the indoor temperature **T1** with time. For estimation of the heat absorbing quantity **Q13**, it is required to previously store the heat capacity **C1** of the indoor space in a setting storage part **122** of the storage unit **12**. In the present embodiment, default values are used as the quantities of heat **Q22, Q23, Q24** and **Q14**. The default values related to those quantities of heat **Q22, Q23, Q24** and **Q14** are also previously stored in the setting storage part **122** of the storage unit **12**.

The calculation unit **13** is configured to estimate the quantity of heat **Q21** that is generated by the cooling and heating apparatus **30**, using the difference between the indoor temperature acquired by the acquiring unit **11** and the setting temperature acquired by the cooling and heating apparatus **30**. The calculation unit **13** is further configured to estimate the heat absorbing quantity **Q13** based on a change of the indoor temperature **T1** with time. The calculation unit **13** is further configured to calculate the quantity of heat **Q12**, using the estimated quantity of heat **Q21** and heat absorbing quantity **Q13** and the default values stored in the setting storage part **122**, as the quantities of heat **Q22, Q23, Q24** and **Q14**. In other words, the calculation unit **13** is configured to estimate, as the quantity of heat **Q12**, a value obtained by subtracting the heat absorbing quantity **Q13** and the quantity of heat **Q14** from the sum of the quantities of heat **Q21, Q22, Q23** and **Q24**. Then, the calculation unit **13** is configured to calculate the thermal resistance **R** by substituting in Formula **1** the data related to the indoor temperature and the outdoor air temperature acquired by the acquiring unit **11** and the calculated quantity of heat **Q12**. In other words, the calculation unit **13** is configured to calculate, as the evaluation value denoting the heat insulation performance, a value obtained by dividing an absolute value |T1 - T2| of a difference between the indoor temperature **T1** and the outdoor air temperature **T2** by the quantity of heat **Q12**. Because the thermal resistance **R** denotes the heat insulation performance of the building, the heat insulation performance of the building with the indoor space that is a target can be estimated through a calculation result of the calculation unit **13**.

The insulation performance estimation device **10** is constituted by, as a main hardware element, a device (such as a microcomputer) with a processor configured to operate according to programs, and a device configured to perform transmission and reception of a signal with other device.

As described above, when the thermal resistance **R** of the partition (wall or the like) surrounding the indoor space is determined, it is possible to grasp a required capacity of the cooling and heating apparatus **30** suitable for the indoor space that is a target. Therefore, if prepared is previously a contrast table regarding thermal resistances **R** and cooling and heating capacities of cooling and heating apparatuses 30, it is possible to calculate a cooling and heating capacity of a cooling and heating apparatus **30** to be required for the indoor space that is a target. In addition, by calculating the thermal resistance **R**, it is also possible to determine, for example, whether a single cooling and heating apparatus **30** with a large cooling and heating capacity should be installed or plural cooling and heating apparatuses **30** each with a small cooling and heating capacity should be installed.

The calculation result of the thermal resistance **R** by the calculation unit **13** may be utilized through other devices. However, the calculation result is preferably presented to the user so that the user can utilize the calculation result. For this reason, the insulation performance estimation device **10** further includes a presentation control unit **14** that is configured to allow a presentation apparatus **40** to present the calculation result by the calculation unit **13**. As the presentation apparatus **40**, used is at least one of a configuration (a display apparatus) of presenting numerical values as visual information and a configuration (a voice output apparatus) of presenting numerical values as audio information.

The presentation apparatus **40** is configured as a dedicated apparatus provided for the insulation performance estimation device **10**. However, the presentation control unit **14** may be configured to allow a generic presentation apparatus **40**, such as a smartphone or a tablet terminal, to present the calculation result. Note that, the technique of allowing the presentation apparatus **40** to present the calculation result by the calculation unit 13 is adopted also in embodiments described later.

Because by the presentation apparatus **40** the heat insulation performance of the building is presented and the thermal resistance **R** (heat insulation performance) is visually presented, a user can confirm a change in the thermal resistance **R**. Accordingly, it is possible to make the user conscious of saving energy. For example, when a windowpane is changed to double-glazed glass through reforming of a house, the user may be satisfied with the reforming, and interest of the user in the heat insulation performance of the building may be further increased, by the presentation apparatus **40** presenting improvement in the heat insulation performance of the building. Therefore, it may promote to make the user conscious of saving energy. Further, its product evaluation may be spread by word of mouth, and accordingly, the sale of the product may be promoted.

Here, because the insulation performance estimation device 10 is used only for estimating heat insulation performance of a building with an indoor space, it is not required to always operate the insulation performance estimation device **10**. A timing of executing the estimation of the heat insulation performance of the building is irregular (e.g., after purchase of an apparatus that generates a relatively-large quantity of heat, after reforming of a house, or when a user him/herself tries to measure the heat insulation performance of the building with the indoor space, using the device). For this reason, the insulation performance estimation device **10** further includes, as an operation unit configured to allow start of calculation of the thermal resistance **R**, a calculation start switch **15** so that the above-mentioned function is activated when the user tries to measure the heat insulation performance of the building, using the device.

When the calculation start switch **15** is operated by the user, the calculation unit **13** newly performs calculation for the thermal resistance **R** of the partition (wall or the like) surrounding the indoor space. That is, the calculation unit **13** calculates the heat insulation performance of the building every operation to the calculation start switch 15. In a case where the storage unit **12** stores a thermal resistance **R** calculated in the past, the calculation unit **13** is configured to update the past calculation result with a new calculation result. That is, the calculation start switch **15** is capable of directing the calculation unit **13** to recalculate the heat insulation performance of the building. Therefore, it is possible to recalculate the heat insulation performance of the building, and accordingly, it is possible to calculate the heat insulation performance of the building at an arbitrary timing, when a state of the building or the environment is changed.

Note that, the calculation start switch **15** may be realized as a touch panel. In addition, the calculation start switch **15** may be used for giving trigger of calculating air conditioning load of the cooling and heating apparatus **30** as described in the following embodiments.

(Second Embodiment)

In the insulation performance estimation device **10** of the First Embodiment, parts of elements used for calculating the thermal resistance **R** are default values. Accordingly, heat insulation performance of a building with an indoor space that is a target is a relative value to some references. For this reason, a cooling and heating capacity of a cooling and heating apparatus **30** suitable for the indoor space that is the target is determined by a comparison with a cooling and heating capacity of a cooling and heating apparatus **30** in use. In the present embodiment, described will be a configuration example that the thermal resistance $R$ can be calculated without the comparison with the cooling and heating capacity of the cooling and heating apparatus **30** in use, by many of elements used for calculating the thermal resistance $R$ being values obtained by measurement.

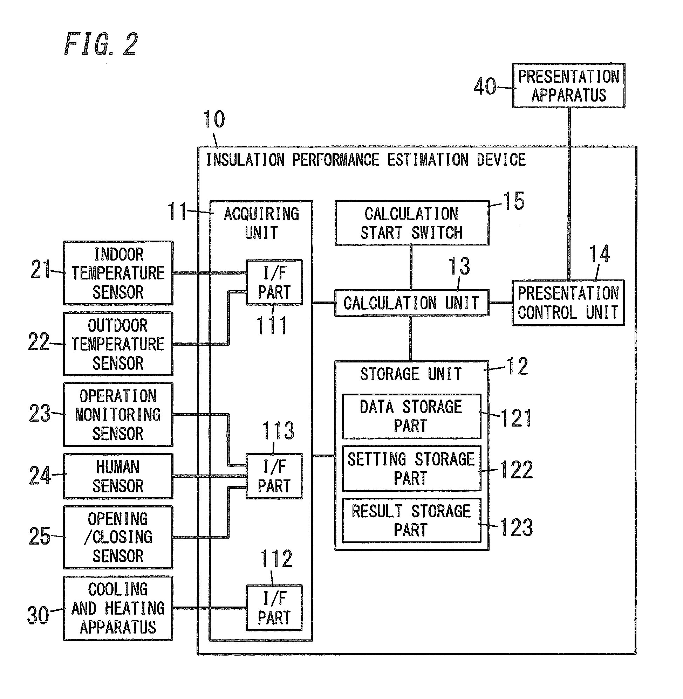

A basic configuration of an insulation performance estimation device **10** of the present embodiment is similar to that of the First Embodiment. However, as shown in Fig. 2, the insulation performance estimation device **10** of the present embodiment is further connected with an operation monitoring sensor **23** and a human sensor **24.** The operation monitoring sensor **23** is configured to monitor an operation state(s) of an apparatus(es) other than the cooling and heating apparatus **30.** The human sensor **24** is configured to measure the number of persons existing in the indoor space. In addition, the insulation performance estimation device **10** is connected with an opening/closing sensor **25** that is configured to detect whether an opening(s), such as a window or a door, is in an opened state or a closed state.

The operation monitoring sensor **23** is not required to monitor all of apparatuses in the indoor space, and may monitor, as targets, apparatuses that have relatively-large influence on a quantity of heat in the indoor space. For example when the indoor space is a kitchen, the operation monitoring sensor **23** may monitor a refrigerator, an electronic oven, a toaster oven, an IH cooker, a luminaire and the like. When the indoor space is a living room, the operation monitoring sensor **23** may monitor a television receiver, a recording apparatus, an audio apparatus, a luminaire and the like. When the indoor space is an office space, targets to be monitored may be a computer, a business machine, a luminaire and the like. It is preferred that the operation monitoring sensor **23** is configured to monitor types of the apparatuses, as targets to be monitored, and electric power or electric current that is consumed by the apparatuses. However, the operation monitoring sensor **23** may be configured to monitor only on/off states of the apparatuses, or monitor types and on/off states of the apparatuses.

The human sensor **24** may have a configuration of counting the number of persons that pass through the entrance of the indoor space (i.e., the number of persons entering the indoor space and the number of persons leaving the indoor space) to calculate the number of persons that stay in the indoor space, or a configuration of counting the number of persons that stay in the indoor space, using an image of the indoor space. As the former, used may be a configuration of counting the number of persons, using an image captured from above the entrance, or a configuration of counting the number of persons that pass through a virtual plane set in the entrance, using a sensor configured to measure distance, or the like.

As the opening/closing sensor **25,** used may be a general configuration including a combination of a reed switch and a magnet, or a limit switch. However, in a case where it is required to detect an opening amount by which a window or a door is opened, the opening/closing sensor **25** may include a position sensor, such as an encoder or a differential transformer. However, in a configuration example described later, only two states (a fully opened state and a fully closed state) are assumed, without consideration of the opening amount by which a window or a door is opened.

In the insulation performance estimation device **10**, an acquiring unit **11** further includes an I/F part **113** that is connected with the operation monitoring sensor **23**, human sensor **24** and opening/closing sensor **25**. As the I/F part **113**, used may be a configuration of always monitoring an output of each of the operation monitoring sensor **23**, human sensor **24** and opening/closing sensor **25**. However, in the present embodiment, used is a configuration of acquiring a change point in an output of each of the operation monitoring sensor **23**, human sensor **24** and opening/closing sensor **25**. In other words, each of the operation monitoring sensor **23**, human sensor **24** and opening/closing sensor **25** is configured to output an interruption signal to the I/F part **113** to allow the I/F part **113** to acquire information related to a state change, when change occurs in a state being monitored.

The insulation performance estimation device **10** of the present embodiment is configured to variously change an environment in the indoor space, for calculation of the thermal resistance $R$. As a basic environment (a first environment), used is an environment in which no person exists in the indoor space, all openings are fully closed in the indoor space, and all apparatuses including the cooling and heating apparatus **30** are in stopped states. In this case, it is assumed that the following quantities of heat are zero: a quantity of heat $Q23$ that is generated by apparatuses other than the cooling and heating apparatus **30**, a quantity of heat $Q24$ that is emitted by a person(s) existing in the indoor space, and a quantity of heat $Q14$ that is transferred between the indoor space and the outdoor through a flow of air with ventilation. In addition, because no person exists in the indoor space, it can be considered that the cooling and heating apparatus **30** is in a stopped state. Accordingly, it can be assumed that a quantity of heat $Q21$ (that is generated by the cooling and heating apparatus **30**) is zero. Note that, in the present embodiment, a quantity of heat $Q22$ by solar radiation is not considered.

In the basic environment, the calculation unit **13** is configured to calculate the thermal resistance $R$ under the above-mentioned conditions. In the case of the above-mentioned conditions, because only consideration of a heat absorbing quantity $Q13$ in Formula 2 is required for calculation of a denominator of Formula 1, it is possible to easily calculate the thermal resistance $R$. The thermal resistance $R$ obtained in the basic environment is stored in a result storage part **123** that is provided in the storage unit **12**.

Here, the environment in the indoor space can be changed by selectively setting information related to whether or not a person(s) exists in the indoor space, whether an opening(s) is opened or closed in the indoor space, and whether an apparatus(es) other than the cooling and heating apparatus **30** is activated or stopped. That is, the environment in the indoor space can be variously changed by a combination of those conditions. From this point of view, the calculation unit **13** is configured to calculate the thermal resistance **R** in each of various environments, each in which a state in any one of three types of conditions is different from that in the basic environment, where the three types of conditions are the presence or absence of a person, the opened or closed state of the opening, and the activated or stopped state of the apparatus.

Here, assumed is an environment (a second environment) where a person(s) exists in the indoor space, and all openings in the indoor space are in closed states, and all apparatuses in the indoor space are in stopped states. In this environment, the quantities of heat **Q21, Q22, Q23** and **Q14** are considered as zero. The human sensor **24** is configured to count the number of persons existing in the indoor space, and the calculation unit **13** is configured to acquire information related to the number of persons via the acquiring unit **11.** When it is considered that quantities of heat that is emitted by persons are equal to each other, it is possible to estimate the quantity of heat **Q24** that is emitted by all persons in the indoor space, by multiplying the number of persons measured by the human sensor **24** by a quantity of emitted heat per person.

From this point of view, assumed is a constraint condition that "regardless of a set environment, calculated thermal resistances **R** (heat insulation performances) should be equal to each other". If the constraint condition is assumed, the calculation unit **13** can obtain the quantity of emitted heat per person in the environment where a person(s) exists, by using the thermal resistance **R** calculated in the basic environment, as the thermal resistance **R** in the environment where a person(s) exists. The quantity of emitted heat per person calculated in this way is stored in the result storage part **123.**

In addition, if set is an environment (a third environment) where no person exists in the indoor space, and an opening in the indoor space is in an opened state, and all apparatuses in the indoor space are in stopped states, it is possible to estimate the quantity of heat **Q14** that is transferred between the indoor space and the outdoor through the opening. That is, according to the above-mentioned constraint condition, the calculation unit **13** can calculate the quantity of heat **Q14** that is unknown, by using the thermal resistance **R** calculated in the basic environment. The calculated quantity of heat **Q14** is stored in the result storage part **123.** Because a difference between temperatures of the indoor space and the outdoor via the opening influences the quantity of heat **Q14**, it is preferred that the quantity of heat **Q14** is made to correspond to a combination of the indoor temperature **T1** and the outdoor air temperature **T2.**

Similarly, if set is an environment (a fourth environment) where no person exists in the indoor space, and all openings in the indoor space are in closed states, and apparatuses in the indoor space are in activated states, it is possible to estimate the quantity of heat **Q23** that is generated by the apparatuses. Regarding the quantity of heat **Q23**, it may be considered that quantities of generated heat by the apparatuses are equal to each other, similarly to the case of the quantity of emitted heat per person. However, a quantity of generated heat corresponding to each apparatus may be estimated by setting environments in which apparatuses to be activated are different from each other. The estimated quantity of heat **Q23** by the apparatuses is stored in the result storage part **123.**

As described above, the calculation unit **13** is configured to calculate a quantity of heat increasing or decreasing in the indoor space, in each of types of environments (first to fourth environments) (there are four types of environments here, but there may be five or more types of environments) that are set by combining the number of persons, the operation state and the opened/closed state. Accordingly, by combining the calculated quantities of heat, the calculation unit **13** can calculate the quantities of heat **Q23, Q24** and **Q14** that are hard to be predicted. In other words, the calculation unit **13** can estimate the quantity of heat **Q23** that is generated by apparatuses, the quantity of heat **Q24** that is emitted by a person(s) and the quantity of heat **Q14** that is transferred with an opened state of an opening, regarding the indoor space of the building that is subject to calculation of the heat insulation performance. Because the quantities of heat **Q23, Q24** and **Q14** estimated in this way are stored in the result storage part **123**, it is possible to calculate heat load of the cooling and heating apparatus **30** to be required for keeping constant a temperature in the indoor space. As a result, a user can grasp a cooling and heating capacity of the cooling and heating apparatus **30** suitable for the indoor space.

By setting the above-mentioned four types of environments, data for providing the quantities of heat **Q23, Q24** and **Q14** is stored in the result storage part **123.** Accordingly, it is possible to calculate the quantity of heat **Q21** that is generated by the cooling and heating apparatus **30**, using the data stored in the result storage part **123**, regarding a state where the indoor temperature **T1** is kept constant by the cooling and heating apparatus **30** in various environments (i.e., a state where the heat absorbing quantity **Q13** is zero). Because the quantity of heat **Q21** corresponds to the heat load of the cooling and heating apparatus **30**, it is possible to determine a performance of a cooling and heating apparatus **30** suitable for the indoor space that is a target, by estimating the heat load of the cooling and heating apparatus **30** under various conditions. Other constituent elements and operations are similar to those of the First Embodiment.

(Third Embodiment)

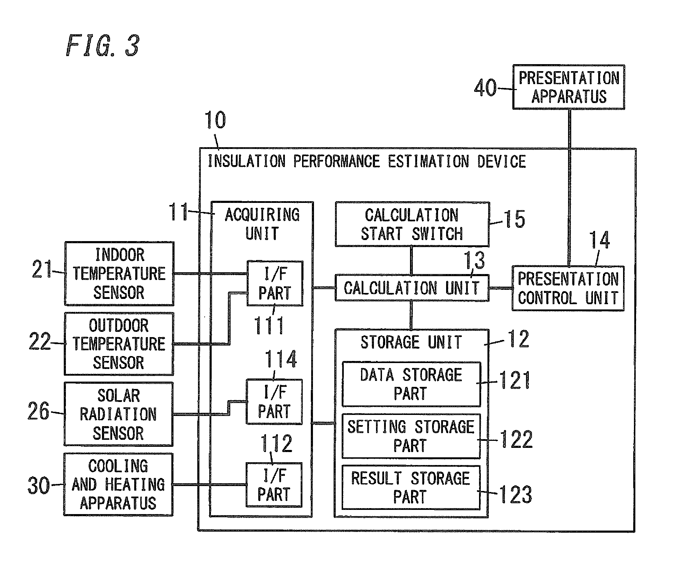

Although a quantity of solar radiation is not considered in the First and Second Embodiments, it is possible to calculate heat load of a cooling and heating apparatus **30**, by considering the quantity of solar radiation, using calculation similar to that in the Second Embodiment. That is, as shown in **Fig.** 3, with an insulation performance estimation device **10** of the present embodiment, connected is a solar radiation sensor **26** that is configured to detect a quantity of solar radiation into an indoor space, in addition to the configuration in the First Embodiment. An output end of the solar radiation sensor **26** is connected with an I/F part **114** that is provided in an acquiring unit 11. The solar radiation sensor 26 includes a photoelectric element, such as a photodiode or a phototransistor. The solar radiation sensor 26 is configured to change an output based on received light intensity or a quantity of received light, and the output is changed, depending on a position where the solar radiation sensor 26 is disposed in the indoor space.

Accordingly, in the present embodiment, calculated is a quantity of heat Q22 corresponding to the output of the solar radiation sensor 26, by setting a basic environment without consideration of solar radiation, like the example described in the Second Embodiment, and an environment with consideration of solar radiation. A relationship between the output of the solar radiation sensor **26** and the quantity of heat **Q22** is stored in a result storage part **123** to be used by a calculation unit **13**. In the present embodiment, because calculated is the relationship between the output of the solar radiation sensor **26** and the quantity of heat **Q22**, it is required to set two or more types of environments in which quantities of solar radiation are different from each other.

As above, when known is the relationship between the output of the solar radiation sensor **26** and the quantity of heat **Q22**, it is possible to calculate heat load of the cooling and heating apparatus **30** for keeping constant an indoor temperature **T1**, even under conditions in which the quantities of solar radiation are different from each other. In other words, according to the insulation performance estimation device **10** of the present embodiment, it is possible to calculate the heat load of the cooling and heating apparatus **30** to be required depending on the quantity of solar radiation, by using an output of an indoor temperature sensor **21**, an output of an outdoor temperature sensor **22** and the output of the solar radiation sensor **26**. In addition, similarly to the Second Embodiment, it is also possible to calculate the heat load of the cooling and heating apparatus **30**, by using the quantities of heat **Q23, Q24** and **Q14** calculated in the different environments. In other words, the technique in the present embodiment may be combined with the technique described in the Second Embodiment. Other constituent elements and operations are similar to those of the First and Second Embodiments, and accordingly, explanations thereof are omitted.

Although the present invention has been described with reference to certain preferred embodiments, numerous modifications and variations can be made by those skilled in the art without departing from the true spirit and scope of this invention, namely claims.

**Claims**

1. An insulation performance estimation device, comprising:

    an acquiring unit configured to acquire an indoor temperature in an indoor space of a building from an indoor temperature sensor, and an outdoor air temperature outside the building from an outdoor temperature sensor; and
    a calculation unit configured to estimate, based on an environment that is set for the indoor space, a quantity of heat that is transferred between the indoor space and an outdoor through a partition surrounding the indoor space,
    the calculation unit being configured to calculate heat insulation performance of the building, based on the quantity of heat, and the indoor temperature and the outdoor air temperature acquired by the acquiring unit.

2. The insulation performance estimation device according to claim 1,
    wherein the acquiring unit is configured to acquire:

    information related to the number of persons, from a human sensor configured to measure the number of persons in the indoor space;
    information related to an operation state of an apparatus, from an operation monitoring sensor configured to monitor the apparatus in the indoor space; and
    information related to an opened/closed state of an opening, from an opening/closing sensor configured to detect whether the opening in the indoor space is in an opened state or a closed state, and
    wherein the calculation unit is configured to respectively calculate plural quantities of heat increasing or decreasing in the indoor space with respect to plural kinds of environments that are set by combining the information related to the number of persons, the operation state and the opened/closed state,
    the calculation unit being configured to calculate heat load for keeping constant the indoor temperature by combining the calculated plural quantities of heat.

3. The insulation performance estimation device according to claim 1 or 2,

wherein the acquiring unit is configured to acquire a quantity of solar radiation from a solar radiation sensor configured to detect the quantity of solar radiation into the indoor space, and

wherein the calculation unit is configured respectively calculate plural quantities of heat increasing or decreasing in the indoor space with respect to plural kinds of environments in which plural quantities of solar radiation are different,

the calculation unit being configured to calculate heat load for keeping constant the indoor temperature, depending on the acquired quantity of solar radiation, with relationships of the calculated plural quantities of heat and the plural quantities of solar radiation.

4. The insulation performance estimation device according to any one of claims 1 to 3, further comprising an operation unit configured to allow the calculation unit to start calculation of the heat insulation performance,

wherein the calculation unit is configured to calculate the heat insulation performance corresponding to an operation to the operation unit.

5. The insulation performance estimation device according to any one of claims 1 to 4, further comprising a presentation control unit configured to allow a presentation apparatus to present a result of calculation by the calculation unit.

6. The insulation performance estimation device according to any one of claims 1 to 5,

wherein the calculation unit is configured to calculate, as an evaluation value denoting the heat insulation performance, a value obtained by dividing an absolute value of a difference between the indoor temperature and the outdoor air temperature by the quantity of heat.

7. The insulation performance estimation device according to any one of claims 1 to 6,

wherein the acquiring unit is configured to perform acquiring operation at prescribed time intervals, and

wherein the calculation unit is configured to calculate the heat insulation performance at the prescribed time intervals.

8. The insulation performance estimation device according to any one of claims 1 to 7,

wherein the calculation unit is configured to estimate, as the quantity of heat that is transferred between the indoor space and the outdoor through the partition surrounding the indoor space, a value obtained by subtracting:

a heat absorbing quantity of the indoor space corresponding to the indoor temperature; and

a quantity of heat that is transferred between the indoor space and the outdoor through a flow of air with ventilation

from a sum of:

a quantity of heat that is generated by an apparatus in the indoor space;
a quantity of heat by solar radiation; and
a quantity of heat that is emitted by a person existing in the indoor space.

FIG. 1

*FIG. 2*

*FIG. 3*

**EP 2 868 824 A1**

**INTERNATIONAL SEARCH REPORT**

| | International application No. |
|---|---|
| | PCT/JP2013/003434 |

### A. CLASSIFICATION OF SUBJECT MATTER
*E04B1/76*(2006.01)i, *F24F11/02*(2006.01)i

According to International Patent Classification (IPC) or to both national classification and IPC

### B. FIELDS SEARCHED

Minimum documentation searched (classification system followed by classification symbols)
E04B1/76, F24F11/02

Documentation searched other than minimum documentation to the extent that such documents are included in the fields searched
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2010-242487 A (Sekisui Chemical Co., Ltd.),<br>28 October 2010 (28.10.2010),<br>paragraphs [0055], [0091] to [0104], [0156];<br>fig. 1 to 4, 6<br>(Family: none) | 1,5,6<br>2-4,7<br>8 |
| Y | JP 5-264086 A (Hitachi, Ltd.),<br>12 October 1993 (12.10.1993),<br>paragraphs [0035], [0039], [0056]; fig. 17<br>(Family: none) | 2-4,7 |
| Y | JP 2002-267235 A (Osaka Gas Co., Ltd.),<br>18 September 2002 (18.09.2002),<br>paragraph [0030]; fig. 2<br>(Family: none) | 3,4,7 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 July, 2013 (23.07.13) | 06 August, 2013 (06.08.13) |

| Name and mailing address of the ISA/<br>Japanese Patent Office | Authorized officer |
|---|---|
| Facsimile No. | Telephone No. |

Form PCT/ISA/210 (second sheet) (July 2009)

13

**INTERNATIONAL SEARCH REPORT**

International application No.

PCT/JP2013/003434

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2008-217328 A  (Hiroshima Industrial Promotion Organization), 18 September 2008 (18.09.2008), paragraphs [0049] to [0056]; fig. 2, 4, 5 (Family: none) | 4,7 |
| A | JP 9-53852 A  (Daikin Industries, Ltd.), 25 February 1997 (25.02.1997), paragraphs [0034] to [0046]; fig. 3 (Family: none) | 8 |
| A | JP 60-133255 A  (Kurita Machinery Mfg. Co., Ltd.), 16 July 1985 (16.07.1985), claim 1; fig. 1, 2 (Family: none) | 2 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S597839 A

- JP 2009014218 A